# EUROPEAN PATENT APPLICATION

(11) **EP 2 944 955 A1**
(43) Date of publication of application: **18.11.2015**
(21) Application number: 14168156.9
(22) Date of filing: 13.05.2014
(51) Int. Cl.: G01N 30/86, G01N 30/72, G01N 30/04, G01N 30/34

(54) **Benchmark for LC-MS systems**

(71) Applicant: Max-Planck-Gesellschaft zur Förderung der Wissenschaften e.V., 80539 München (DE)
(72) Inventor: The designation of the inventor has not yet been filed
(74) Representative: Vossius & Partner Patentanwälte Rechtsanwälte mbB

(57) **Abstract**

The present invention relates to a method of monitoring performance of a liquid chromatography-mass spectrometry (LC-MS) system, comprising the steps of: (a) performing LC with a first buffer, said first buffer comprising a defined concentration of a first compound, said performing comprising a step of eluting; (b) subjecting the eluate of said LC to electrospray ionization; and (c) determining the amount of said first compound in said eluate by means of MS, thereby monitoring said performance; wherein said first compound (i) has either no affinity or negligible affinity to the chromatographic matrix; and (ii) is detectable by MS.

## Description

The present invention relates to a method of monitoring performance of a liquid chromatography-mass spectrometry (LC-MS) system, comprising the steps of: (a) performing LC with a first buffer, said first buffer comprising a defined concentration of a first compound, said performing comprising a step of eluting; (b) subjecting the eluate of said LC to electrospray ionization; and (c) determining the amount of said first compound in said eluate by means of MS, thereby monitoring said performance; wherein said first compound (i) has either no affinity or negligible affinity to the chromatographic matrix; and (ii) is detectable by MS.

In this specification, a number of documents including patent applications and manufacturer's manuals are cited. The disclosure of these documents, while not considered relevant for the patentability of this invention, is herewith incorporated by reference in its entirety. More specifically, all referenced documents are incorporated by reference to the same extent as if each individual document was specifically and individually indicated to be incorporated by reference.

Mass spectrometry (MS)-based investigations commonly apply adsorption-based chromatography to separate analytes prior to MS analysis, reducing sample complexity and making the analytes amenable for investigation. In this approach typically two or more mobile phases are used to first bind the analyte to the affinity matrix followed by selective elution in a reproducible manner by altering the concentrations of these mobile phases. Normally two mobile phases, one favoring binding and one promoting elution, are mixed during transport to the affinity matrix, creating a decreasing binding affinity of the analytes. Gradient elution and isocratic elution are specific examples. The analytes elute according to their chemical and/or physical properties that are relevant for the interaction to the adsorption matrix. Reproducible and high resolution separation of analytes strongly depends on very precise mixing of the mobile phases and on very exact flow-rates. For instance, in MS-based shotgun proteomics, an aqueous first buffer and an organic second buffer are typically mixed to provide a gradient over about an hour. This gradient is delivered at very low flow rates by a high pressure pump (the HPLC pump) to a very narrow column packed with micrometer sized beads with a C18 based surface. Peptides are bound to the column in pure first buffer and the gradient elutes them according to their hydrophobicity followed by on-line ionization and MS-analysis. Precise control, reproducibility and knowledge of the percentages of both buffers are crucial to successful MS-based proteomics experiments and many other areas of analytical chemistry.

Manufacturers commonly benchmark and calibrate their chromatography systems by spectroscopic methods. For example acetonitrile, which can be quantified using UV-spectroscopy, is frequently used as a buffer or buffer constituent and its concentration is monitored by absorbance. In practice, the flow-rate of each buffer is measured by flow-sensors prior to mixing and the final concentration of each buffer in the mixture is calculated from these values. This calculated value is an indirect estimate of the actual mobile phase conditions on the affinity column which is subject to many biases such as the sensitivity of the measurement, the volume downstream of the flow-sensor, or potential back-mixing effects. Furthermore, leaks can occur anywhere in high-pressure systems which can affect the accuracy of the benchmark and even render it useless. Troubleshooting can therefore be cumbersome and the actual cause for error is often difficult to determine by the reported mixing values. This is especially problematic in modern nano-flow systems, which involves flow rates down to tens of nL/min. The low flow rates make them very difficult to control by the pump and fluctuations and leaks can be extremely difficult to detect. Knowledge of precise real-time values of buffer concentrations and flow-rates at the level of MS-analysis would therefore be of profound value for trouble-shooting and quality assessment.

In other words, the technical problem underlying the present invention can be seen in the provision of improved means and methods for operating LC-MS systems. This technical problem is solved by the embodiments provided below.

In a first aspect, the present invention relates to a method for operating a liquid chromatography mass spectrometry (LC-MS) system, comprising the steps of: (a) performing LC with a first buffer, said first buffer comprising a defined concentration of a first compound, said performing comprising a step of eluting; (b) subjecting the eluate of said LC to electrospray ionization; and (c) determining the amount of said first compound in said eluate by means of MS; wherein said first compound (i) has either no affinity or negligible affinity to the chromatographic matrix; and (ii) is detectable by MS.

Preferred embodiments and advantages of said first aspect are described below in relation to second and third aspect.

In a second aspect, the present invention relates to a method of monitoring performance of a liquid chromatography-mass spectrometry (LC-MS) system, comprising the steps of: (a) performing LC with a first buffer, said first buffer comprising a defined concentration of a first compound, said performing comprising a step of eluting; (b) subjecting the eluate of said LC to electro-spray ionization; and (c) determining the amount of said first compound in said eluate by means of MS, thereby monitoring said performance; wherein said first compound (i) has either no affinity or negligible affinity to the chromatographic matrix; and (ii) is detectable by MS.

Any definitions given in the following apply to all aspects and embodiments of the invention if not expressly indicated to the contrary.

The term "operating" is defined in terms of steps (a) to (c) of the first aspect. The term also extends to its art-established meaning including routine operations on both the LC and the MS component of the LC-MS system.

The term "performance" has its art-established meaning. More specifically, performance includes one or more of the following: accuracy, precision, resolution, reproducibility, dynamic range, stability and threshold of detection. The term "monitoring" includes determining performance at one or more given points in time as well as continuous determining of performance over time. The latter is preferred.

The term "liquid chromatography-mass spectrometry system" abbreviated as "LC-MS system", is known in the art (see, e.g., Thurman, E. M.; Ferrer, Imma (2003). Liquid chromatography/mass spectrometry, MS/MS and time of flight MS: analysis of emerging contaminants. Columbus, OH: American Chemical Society. ISBN 0-8412-3825-1) and refers to a system comprising at least two devices, the first device being a chromatography device such as column configured for the separation of liquid phases as well as of compounds dissolved in liquid phases. The second device is a mass spectrometer. The mass spectrometer in turn minimally comprises an ionization device, a device where ions are separated according to their mass-to-charge (m/z) ratio, and a detector. Even though not required, it is preferred that (a) flow sensor(s) measuring the flow rate(s) of the buffer(s) is/are comprised in the system.

Chromatography device and mass spectrometer may be coupled online in which case the system is referred to as "online LC-MS system" as known in the art. Alternatively, the system may be operated offline, e.g. in order to perform offline fractionation. Both possibilities apply to all aspects and embodiments.

Among the liquid phases to be used for performing liquid chromatography, there is at least a first buffer, the first buffer comprising a defined concentration of a first compound. In many instances, liquid chromatography is performed by using a system of two buffers, said two buffers preferably being used for generating a gradient. Having said that, the methods of first and second aspect of the present invention are also applicable to a simpler system employing just a single buffer.

The term "performing LC" has its usual meaning and is detailed further below. According to the invention, performing LC at least includes a step of eluting. It may furthermore include one or more steps selected from equilibrating, sample loading, washing and mixing, the latter in case two or more buffers are used.

The mentioned first compound is characterized by properties (i) and (ii) as recited in the first and second aspect. "Negligible affinity" refers to an equilibrium fraction of said first compound bound to said matrix below 5%, 4%, 3%, 2%, 1%, 0,05% or 0,01%.

Given that performing LC includes a step of eluting, it follows that an eluate is generated which is subjected to downstream processing as it is routine in an LC-MS system. According to the invention, the eluate is subjected to ionization which is performed with an electrospray ionization device. The mass spectrometer coupled to the liquid chromatography system is then used to analyze the eluate which includes at least determining the amount of the first compound in the eluate. Preferably, said amount is the concentration.

Accordingly, the addition, also referred to as spiking-in, of said first compound into said first buffer provides for benchmarking of the LC-MS system as a whole, noting that the read-out occurs at the level of MS. Having said that, and this is detailed further below, the method of the present invention provides for the assessment of the performance of individual components of the LC-MS system as well. As opposed to the established methods using flow-rate sensors, the present invention permits to directly assess the status on the LC column or device, more specifically at the end of the column proximal to the MS.

Turning to the above defined first compound, we note that any compulsory or preferred features characterizing said first compound apply *mutatis mutandis* to any of the below disclosed second or further compounds. In particular, as noted above, said first compound is detectable by mass spectrometry. To explain further, said first compound is ionisable by electrospray. Furthermore, the mass-to-charge ratio is within the observable range of the mass spectrometer, preferably between 50 and 5000 m/z, 100 to 2000 m/z, or 300 to 1700 m/z. Specific compounds meeting these requirements are disclosed further below.

Further preferred properties of first compounds are as follows. They do not at all or substantially not interact with the analytes to be detected. In particular, adding said compound to said buffer leads to no significant observable changes of the analyte quantities or elution order compared to measurements without the mentioned compounds. Having said that, improved ionization of the analytes as a consequence of adding said compound is a deliberately envisaged option; see further below. Preferred analytes in accordance with the present invention are disclosed further below. Even though this is not required, it is generally assumed that analytes are present while operating the LC-MS system in accordance with the present invention.

Furthermore, it is preferred that the ions formed from said first compound in the course of ionization are reproducibly being formed. Also, it is preferred that the ions formed from said first compound exhibit a reproducible behaviour under analyte fragmentation conditions, wherein preferred analytes are peptides. The latter properties are easily assessed by the skilled person.

Other preferred properties of said first compound include the following. The first compound may be a fluorescent compound, thereby providing a second option for detection. Furthermore, said first compound may be used to improve ionization of the analytes. In other words, it may act as active or passive carrier during the ionization process.

In a preferred embodiment said performance is selected from (a) performance of the LC system comprised in said LC-MS system, preferably performance of mixing, loading, and/or pumps; (b) performance of the electro-spray ionization device comprised in said LC-MS system, preferably performance thereof in terms of spray-stability such as fluctuations of ionization efficiency, droplet formation, and background signals; (c) performance of the MS system comprised in said LC-MS system, preferably performance of the quadrupole and mass-analyzer such as efficiency of mass selection, mass accuracy, resolution and ion-intensities measured; and (d) performance of said LC-MS system as a whole, preferably performance as a traceable factor for comparisons between measurements.

The term "mixing" refers to, as known in the art, the mixing of buffers. The term "loading" refers to sample loading, i.e. the application of a sample onto the liquid chromatography device or column.

The LC system is normally operated in the following manner:
(1) Equilibration. This is typically done with those buffers which will subsequently be used for the gradient. Since compounds according to the present invention are present in said buffers, ions of said compounds will be observed, thereby allowing a monitoring of the equilibration process.
(2) Loading of the sample. Sample loading is generally performed with a different buffer. To the extent no compounds in accordance with the present invention are comprised in the loading buffer, no ions will be observed after passage of the void volume. Alternatively, yet further compounds according to the present invention may be spiked into the loading buffer, thereby allowing for a separate monitoring of the loading process.
(3) Starting of the gradient. Typically, time is set to zero when the gradient is started.
(4) The buffer ions reach the mass spectrometer. Relative to the start of the gradient this occurs with a certain time delay, said time delay corresponding to the void volume. For example, said first compound (as well as further compounds according to the present invention to the extent they are being used) are observed ten minutes later than the gradient start. Since the mentioned time delay is known, and furthermore flow rate of the LC system is known (for example 250 nl/min), the void volume can be easily calculated - in the present case 2500 nl.
(5) Elution. The term elution has its art-established meaning and refers to establishing conditions which interfere, preferably increasingly interfere with the binding of the analyte(s) to the matrix of the LC system or column. Such increasing interference with binding may be established with a gradient. Subsequent to the passage of the void volume, the compound(s) of the invention can be used to determine the status of the gradient. In case only a first compound is being used, the status of the gradient is given by the ratio [1]_{c}/[1]ₘₐₓ, [1]_{c} being the current concentration of the first compound and [1]ₘₐₓ being the maximal concentration of the first compound as determined at the end of the gradient. In case two compounds (a first compound and a second compound) are used, the status of the gradient is given by the ratio [1]/([1]+[2]), [1] and [2] being the concentrations of first and second compound at a given point in time. Alternatively or in addition, the ratio [2]/([1]+[2]) may be determined. The sum [1] + [2] is expected to be constant. The concentrations of compounds of the invention are determined as ion intensities in the MS. Deviant behaviour of these ratios is indicative of performance problems of the LC/MS system and can be used, for example, for diagnostics and trouble shooting. These and other applications are described in the following.

With regard to performance of the LC system, we note that the method permits the calculation of the void volume of the LC system (from the pump to the electro-spray; see above) and therefore the time-delay of the observed elution times as compared to the values reported by the LC-system.

Also, fluctuations in the mobile phase can be determined. E.g., the ratios of the spiked-in compounds might not correspond to the flow-sensor values (as determined by the art-established means). This is indicative of fluctuations in the mobile phase. It is understood that, when comparing the intensities of the ions formed from the spiked-in compounds to the flow-sensor values, account is taken of the volume dependent time delay: the flow-sensors report the status prior to the LC column, and the amounts of the ions formed from the spiked-in compounds report the status after the column. Buffer quality, back-mixing, leaks, flow-sensor miscalibration, or pump issues introduce characteristic off-sets of these values which can be determined using the method of the invention and for trouble-shooting. For instance, a strong increase of ion concentrations can be interpreted as evaporation of the mobile phases.

The following behavior or deviant behavior of amounts of the first compound (and of further compounds, to the extent they are being used) of the present invention are indicative of specific deficiencies of the LC system:
(1) The pre-set percentage of a buffer component, for example a first buffer, is not reached. Instead, strong fluctuations are observed in the amount of ions of the first compound. In that case, malfunctioning of the pumphead is at least likely.
(2) The gradient is being built up correctly, but it does so in a delayed manner. This is indicative of a leaky valve.
(3) The starting point (in time) of the gradient is correct, however, the gradient is too shallow. This is indicative of a miscalibrated flow sensor.
(4) The gradient is very smooth. Any sharp changes to the conditions appear "rounded off" in the MS. This is indicative of back mixing occurring in the LC system.
(5) Strong intensities of ions either only of the first compound or only the second compound. This is indicative of bad buffers, e.g. buffers the composition of which deviates from the intended composition.

As defined in the above item (b), a further preferred embodiment of quality control and performance monitoring relates to the spray stability and further MS parameters and can be performed on the basis of the measured time dependent signals of the spiked-in compounds during electrospray and MS analysis. Among many other benefits, the evaluation of electrospray stability can be monitored from the recorded MS-signal of the first compound (or "spike-in"). Because the detected spike-in ion quantities are influenced by the flow-rate and the sensitivity of electrospray, electrospray breakdown can be diagnosed by strong milli-second or longer spikes in reported values (no ion can be observed while a droplet is formed). These milli-second up and down fluctuations in intensities might be caused by intermittent droplet formation at the electrospray tip (in the art also known as "column spitting").

In a third aspect, the present invention relates to a method of separating or fractionating using a liquid chromatography-mass spectrometry (LC-MS) system, comprising the steps of: (a) performing LC with a first buffer, said first buffer comprising a defined concentration of a first compound, said performing comprising a step of eluting with a gradient; and (b) determining the amount of said first compound in the eluate by means of MS, thereby defining a given separation time or fraction; wherein said first compound (i) has no or negligible affinity to the chromatographic matrix; and (ii) is detectable by MS.

The term "fractionating" has its art-established meaning. As such, it refers to partitioning the eluate into different parts, usually as a function of time. The term "separating" refers to the separation of analytes. Typically, fractionating is a means of separating. In case the elution properties of an analyte are known, fractionating may be designed such that a given analyte of interest is found in one single fraction.

Given that the use of said first compound provides for an improved monitoring of the status of the LC-MS system, it also provides for an improved determination of the respective current status of the LC column. Since the respective current status of the LC column is decisive for the elution profile, the present invention also provides the above improved method of separating or fractionating.

In a preferred embodiment of first, second and third aspect of the present invention said LC is gradient liquid chromatography using said first buffer, furthermore a second buffer, and optionally one or more further buffers. For example, said first buffer may be an aqueous buffer, and said second buffer may be an organic buffer comprising one or more organic solvents selected from acetonitrile, methanol and DMSO. This is used in order to provide increasing elution conditions. Buffer systems for LC-MS devices are well established in the art. In a more preferred embodiment, said second buffer and, if present, each of said one or more further buffers comprises a defined concentration of a second compound and, if applicable, one or more further compounds, respectively, and said method comprises the further step: (c) determining the concentration of said second compound and, if applicable, said one or more further compounds, in the eluate by means of MS; wherein said second and, if applicable, said further compound(s) (i) has/have no or negligible affinity to the chromatographic matrix; (ii) is/are detectable by MS; and is/are different from said first compound and, if applicable, from each other.

As will be discussed in more detail below, in accordance with the invention two compounds are considered different also in those cases where their chemical constitution and configuration is identical and only the constituent isotopes or isotope frequency is different.

The above defined preferred embodiment provides an extension of the more generic embodiments defined above in that in total two or more compounds, each one being spiked into a respective corresponding buffer, are being used.

In a typical scenario the method allows measuring the intensity of the first compound spiked into the first buffer and the second compound spiked into the second buffer. The ratio between the two signals, more specifically the ratios as defined further above, provide a precise measure of the ratio of first to second buffer at the point of ionization.

Moreover, different compounds allow to distinguish the effects of different events such as column equilibration, sample-loading, gradient start, gradient position, and column washing. Column equilibration is commonly performed with loading buffer and does not contain any elution condition, therefore only the ion spiked-into the loading buffer is observed. Sample-loading is often performed using a separate buffer bottle, during loading only ions introduced during loading would be observed. The gradient start can be observed by the initial observation of the buffers used during the gradient. The position of the gradient can be defined by the mixing properties of the buffers as in the concentration of the elution condition (for example quantity of buffer containing organic in a reversed-phase chromatography measurement). Column washing is performed at very strong eluting conditions, usually a concentration above the concentration used during a gradient indicates washing.

Further, a detailed record of the ratios of the spiked-in compounds can reveal important information about the interaction behavior of the analyte with the solid phase. Every affinity matrix renders a partial size-dependent separation and the differentiation of affinity-and size-factors would be highly interesting. The observation of such behavior is very useful for precise elution prediction.

On the other hand, it is also envisaged (though less preferred) that in those cases where more than one buffer is used not each of the used buffers, but only one or a subset thereof comprises spiked-in compounds. To give an example, if two buffers are used, only the first buffer may comprise a first spiked-in compound. Analogously, in systems where more than two buffers are used, only a first compound may be spiked into the first buffer and a second compound may be spiked into the second buffer.

In a further preferred embodiment of any of the aspects of the invention, the concentration(s) of said compound(s) is/are used to normalize quantities of analytes within or across different measurements.

To explain further, peaks corresponding to the analytes normally sit on an imperfect baseline, imperfections in the baseline being attributable to biases introduced by suboptimal performance of one or more components of the LC-MS system. The internal standard provided by the compounds of the present invention allows to quantify said biases and to draw up a corrected peak shape for each of the analytes. By performing said normalization/correction, the threshold of detection is effectively lowered. To explain further, one would expect the sum of the ion-intensities to remain almost constant but in practice these are fluctuations on a millisec to min scale. If one assumes they should remain steady, one can calculate a local correction factor (as in percent above or below): measured/expected.

This allows for determining a correction factor which is a function of time.

As a consequence, the present invention paves the way for single cell proteomics and accurate low abundant peak quantification.

In a preferred embodiment of first, second and third aspect, the concentration(s) of said compound(s) is/are used to predict elution of analytes within or across different measurements and/or are used to identify analytes within or across different measurements.

In a fourth aspect, the present invention provides a kit comprising or consisting of a first compound, a second compound and optionally one or more further compounds, wherein all compounds (i) have no or negligible affinity to a chosen chromatographic matrix; (ii) are detectable by MS; and (iii) are different from each other.

In a preferred embodiment of the above-defined fourth aspect of the present invention, i.e., of said methods and said kit, said first compound, said second compound, and, if applicable, said further compounds (iv) have similar ionization properties; (v) are differently isotope labelled forms of otherwise the same compounds; and/or (vi) are isobaric and fragment differently when the mass spectrometer is operated in fragmentation mode.

An example of two compounds having "similar ionization properties" are two compounds which are differently isotope labelled but otherwise identical. Such compounds are not or almost not distinguishable by chromatography, nor do they have different electrospray behavior. They can only be differentiated in the mass spectrometer by their mass.

As an alternative or in addition, said compounds are differently isotope labelled forms of otherwise the same compounds. Accordingly, said compounds are chemically identical while comprising different isotopes of corresponding atoms. For example, stable isotope labelling with amino acids in cell culture (SILAC) may be used to manufacture an isotope labelled counterpart of a given compound. For example, said first compound may be a SILAC labelled form of a given compound, and said second compound may be the same compound, but is not isotope labelled and/or has the naturally occurring isotope frequency. To the extent that more than two compounds are used, any further compound may also be a chemically identical compound but with a yet different isotope labelling. For example, for the purpose of preparing a third compound, again SILAC may be used, wherein the cell culture employed for SILAC is fed with media comprising different isotopes or isotope frequency as compared to the - otherwise identical - media used for preparing said first compound. A binary system comprising a first and second compound which differ only with regard to isotopes is exemplified in the examples enclosed herewith.

We note that the option of using differently isotope labelled forms of otherwise the same compounds is especially preferred in accordance with the present invention. One or more other features, such as features (iv), (vi) as well as (vii) to (ix) as defined further below may be used in conjunction, but not necessarily have to.

As an alternative or in addition, said first, said second and, if applicable, said further compounds, while being isobaric, fragment differently in case the mass spectrometer is operated in fragmentation mode such as MS/MS or all ion fragmentation (AIF).

The term "isobaric" has its usual meaning in relation to mass spectrometry and refers to the mentioned compounds having the same molecular weight. The choice of isobaric compounds is advantageous in the sense that in a non-fragmented scan performed in the MS, the observed MS spectrum will be of lower complexity (isobaric compounds will give rise to coinciding peaks).

In a preferred embodiment of the kit according to the present invention, the compounds are provided in the form of tablets comprising defined amounts of said compounds, each of said tablets being confectioned to be added to a defined volume of a corresponding buffer, respectively.

Furthermore, said kit may comprise a manual containing instructions for performing the methods of the invention; see first, second and third aspect above.

In a further preferred embodiment of the above described aspects of the present invention, said first compound, said second compound and, if applicable, said one or more further compounds furthermore (vii) do not directly interact with the analytes to be analyzed while preferably improve ionization of said analytes; (viii) are fluorescent; and/or (ix) can be used as a mass standard for mass calibration in MS. A mass standard for mass calibration in MS is also referred to as "lock mass" in the field of MS. The term "direct interaction" preferably refers to binding of any of said compounds of the invention to any of said analytes. The improvement of ionization does not involve such direct interaction. Rather, it modifies the evaporation process within the ESI.

In a further preferred embodiment of any one of the aspects of the invention, said first compound, said second compound and, if applicable, said one or more further compounds are independently selected from hydrophilic amino acids such as glutamine, asparagine, glutamic acid and aspartic acid, chemicals with a hydrophilic properties or isotope labelled forms of these compounds.

In a further preferred embodiment of any of the aspects of the present invention, chromatographic matrix is selected from reversed phase materials such as C4, C8, C18 and styrene divinyl benzene (SDB), or wherein the chromatographic matrix is selected from hydrophilic interaction (HILIC) materials.

In a further preferred embodiment of any of the aspects of the invention, the analytes are or include proteins, polypeptides, peptides, nucleotides, metabolites, and/or small molecules. Small molecules include small organic molecules and preferably have a molecular weight below 500 Da.

In a further preferred embodiment, said first buffer is an aqueous buffer and said second buffer is an organic buffer, preferably comprising acetonitrile, methanol and/or DMSO.

As regards the embodiments characterized in this specification, in particular in the claims, it is intended that each embodiment mentioned in a dependent claim is combined with each embodiment of each claim (independent or dependent) said dependent claim depends from. For example, in case of an independent claim 1 reciting 3 alternatives A, B and C, a dependent claim 2 reciting 3 alternatives D, E and F and a claim 3 depending from claims 1 and 2 and reciting 3 alternatives G, H and I, it is to be understood that the specification unambiguously discloses embodiments corresponding to combinations A, D, G; A, D, H; A, D, I; A, E, G; A, E, H; A, E, I; A, F, G; A, F, H; A, F, I; B, D, G; B, D, H; B, D, I; B, E, G; B, E, H; B, E, I; B, F, G; B, F, H; B, F, I; C, D, G; C, D, H; C, D, I; C, E, G; C, E, H; C, E, I; C, F, G; C, F, H; C, F, I, unless specifically mentioned otherwise.

Similarly, and also in those cases where independent and/or dependent claims do not recite alternatives, it is understood that if dependent claims refer back to a plurality of preceding claims, any combination of subject-matter covered thereby is considered to be explicitly disclosed. For example, in case of an independent claim 1, a dependent claim 2 referring back to claim 1, and a dependent claim 3 referring back to both claims 2 and 1, it follows that the combination of the subject-matter of claims 3 and 1 is clearly and unambiguously disclosed as is the combination of the subject-matter of claims 3, 2 and 1. In case a further dependent claim 4 is present which refers to any one of claims 1 to 3, it follows that the combination of the subject-matter of claims 4 and 1, of claims 4, 2 and 1, of claims 4, 3 and 1, as well as of claims 4, 3, 2 and 1 is clearly and unambiguously disclosed.

The Figures show:
**Figure 1****:** Linear Gradient (Proxeon EASY-nLC II HPLC System). Unstable electrospray was observed by single scan changes in percentage B.
**Figure 2****:** Malfunctioning UHPLC (Proxeon EASY-nLC 1000 UHPLC System) with a leak at rotor valve B.
**Figure 3****:** Effect of pre-column dead volumes on the HPLC gradient. Backmixing of dead-volumes before the packed bed leads to imprecise buffer mixing (lower dotted line). Reduction of the dead volume can improve precision and accuracy of the desired gradient (continuous line).

The Examples illustrate the invention.

### Example 1

### Methods

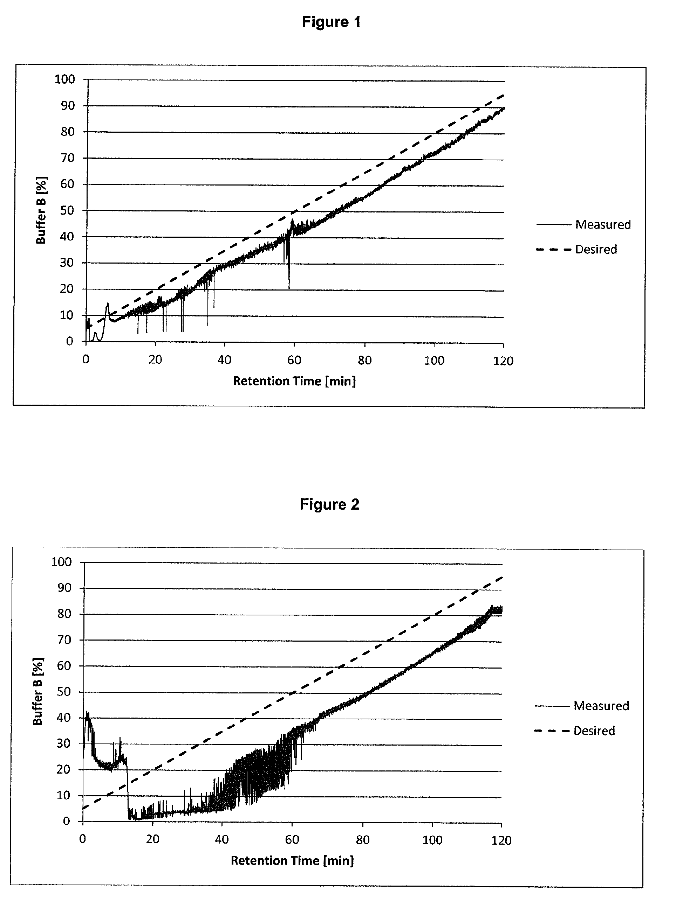

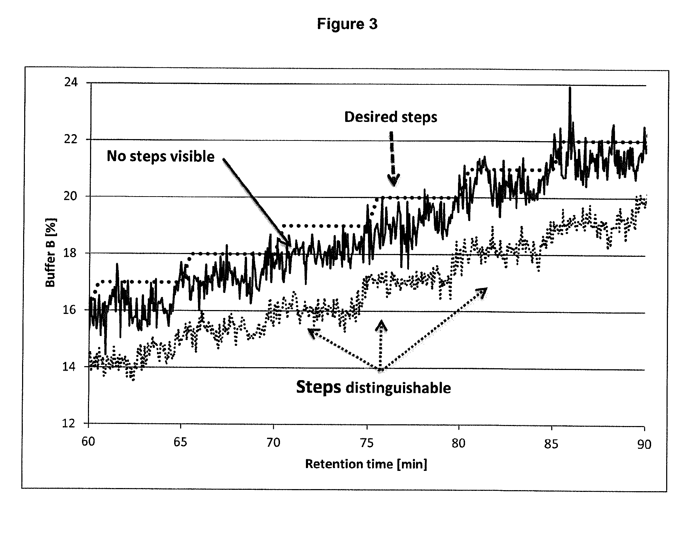

Spike-in stock solutions (1.000x) were prepared by desolving 146.2 mg of non-labelled L-(+)-Glutamine and 147.2 mg of heavy isotope labelled L-Glutamine (5-13C, 99%) in 50 ml HPLC grade water each. Heavy-labelled ions were added to the aqueous HPLC buffer A (0.1% formic acid) and non-labelled ions were mixed with the organic buffer B (80% acetonitrile, 0.1% formic acid). The ions were then observed in mass spectrometric scans on Orbitrap mass spectrometers at the m/z of 147.07669 (buffer B) and 148.08044 (buffer A). Evaluation of HPLC performance was evaluated using linear 120 min gradients of 5 % buffer B to 95 % buffer B at 250 nl/min flow (fig. 1 and 2). Dead-volume backmixing effects were observed applying a stepped gradient increasing by 1% percent buffer B within 1 min and maintaining the percentage B for 4 min (fig. 3). The percentage of buffer B was calculated by dividing the intensity of the B ion (m/z 147.07669) by the combined intensities A and B.

### Example 2

### Results

The observed ions resulted in accurate percentage B read-outs (fig. 1-3). Unstable spray and droplet formations were observed as brief jumps in the percentage read-out (fig. 1, unstable spray at retention times 14, 16, 23, 24, 29, 34, 38 min; droplet formation at retention time 60 min). A malfunctioning in the HPLC system could be visualized because desired concentrations of percentage B were not achieved in the first minutes of the gradient (fig. 2), aiding in trouble-shooting and fixing of the LC system. Additionally backmixing in pre-column dead-volumes could be observed using a stepped gradient (fig. 3). The reduction of the dead volume improves accuracy of percentage B in an observable range.

## Claims

1. A method of operating a liquid chromatography-mass spectrometry (LC-MS) system, comprising the steps of:
(a) performing LC with a first buffer, said first buffer comprising a defined concentration of a first compound, said performing comprising a step of eluting;
(b) subjecting the eluate of said LC to electro-spray ionization; and
(c) determining the amount of said first compound in said eluate by means of MS; wherein said first compound
(i) has either no affinity or negligible affinity to the chromatographic matrix; and
(ii) is detectable by MS.

2. A method of monitoring performance of a liquid chromatography-mass spectrometry (LC-MS) system, comprising the steps of:
(a) performing LC with a first buffer, said first buffer comprising a defined concentration of a first compound, said performing comprising a step of eluting;
(b) subjecting the eluate of said LC to electro-spray ionization; and
(c) determining the amount of said first compound in said eluate by means of MS, thereby monitoring said performance;
wherein said first compound
(i) has either no affinity or negligible affinity to the chromatographic matrix; and
(ii) is detectable by MS.

3. The method of claim 2, wherein said performance is selected from
(a) performance of the LC system comprised in said LC-MS system, preferably performance of mixing, loading, and/or pumps;
(b) performance of the electro-spray ionization device comprised in said LC-MS system, preferably performance thereof in terms of spray-stability such as fluctuations of ionization efficiency, droplet formation, and background signals; and
(c) performance of the MS system comprised in said LC-MS system, preferably performance of the quadrupole and mass-analyzer such as efficiency of mass selection, mass accuracy, resolution and ion-intensities measured.

4. A method of separating or fractionating using a liquid chromatography-mass spectrometry (LC-MS) system, comprising the steps of:
(a) performing LC with a first buffer, said first buffer comprising a defined concentration of a first compound, said performing comprising a step of eluting with a gradient; and
(b) determining the amount of said first compound in the eluate by means of MS, thereby defining a given fraction;
wherein said first compound
(i) has no or negligible affinity to the chromatographic matrix; and
(ii) is detectable by MS.

5. The method of any one of claims 1 to 4, wherein said LC is gradient liquid chromatography using said first buffer, furthermore a second buffer, and optionally one or more further buffers.

6. The method of claim 5, wherein said second buffer and, if present, each of said one or more further buffers comprises a defined concentration of a second compound and, if applicable, one or more further compounds, respectively, and said method comprises the further step:
(c) determining the concentration of said second compound and, if applicable, said one or more further compounds, in the eluate by means of MS;
wherein said second and, if applicable, said further compound(s)
(i) has/have no or negligible affinity to the chromatographic matrix;
(ii) is/are detectable by MS; and
(iii) is/are different from said first compound and, if applicable, from each other.

7. The method of any one of claims 1 to 6, wherein the concentration(s) of said compound(s) is/are used
(i) to normalize quantities of analytes within or across different measurements; and/or
(ii) to predict elution of analytes within or across different measurements and/or are used to identify analytes within or across different measurements.

8. A kit comprising or consisting of a first compound, a second compound and optionally one or more further compounds, wherein all compounds
(i) have no or negligible affinity to a chosen chromatographic matrix;
(ii) are detectable by MS; and
(iii) are different from each other.

9. The method of claim 6 or 7 or the kit of claim 8, wherein said first compound, said second compound, and, if applicable, said further compounds
(iv) have similar ionization properties;
(v) are differently isotope labelled forms of otherwise the same compounds; and/or
(vi) are isobaric and fragment differently when the mass spectrometer is operated in fragmentation mode.

10. The kit of claim 8, wherein
(a) the compounds are provided in the form of tablets comprising defined amounts of said compounds, each of said tablets being confectioned to be added to a defined volume of a corresponding buffer, respectively; and/or
(b) the kit further comprises a manual containing instructions for performing the method of any one of claims 1 to 7.

11. The method of any one of claims 1 to 7, or the kit of any one of claims 8 to 10, wherein said first compound, said second compound and, if applicable, said one or more further compounds furthermore
(vii) do not directly interact with the analytes to be analyzed while preferably improve ionization of said analytes;
(viii) are fluorescent; and/or
(ix) can be used as a mass standard or calibrant for mass calibration in MS.

12. The method or kit of any one of the preceding claims, wherein said first compound, said second compound and, if applicable, said one or more further compounds are independently selected from hydrophilic amino acids such as glutamine, asparagine, glutamic acid and aspartic acid, chemicals with a hydrophilic properties or isotope labelled forms of these compounds.

13. The method or kit of any one of the preceding claims, wherein the chromatographic matrix is selected from reversed phase materials such as C4, C8, C18 and styrene divinyl benzene (SDB), or wherein the chromatographic matrix is selected from hydrophilic interaction (HILIC) materials.

14. The method or kit of any one of the preceding claims, wherein the analytes are or include proteins, polypeptides, peptides, nucleotides, metabolites, and/or small molecules.

15. The method or kit of any one of the preceding claims, wherein said first buffer is an aqueous buffer and said second buffer is an organic buffer, preferably comprising acetonitrile, methanol and/or DMSO.
